Europäisches Patentamt

European Patent Office

Office européen des brevets

(19)

(11) **EP 1 389 762 A2**

(12) **EUROPEAN PATENT APPLICATION**

(43) Date of publication:
**18.02.2004 Bulletin 2004/08**

(51) Int Cl.[7]: **G06F 17/18**

(21) Application number: **03075816.3**

(22) Date of filing: **20.03.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **29.03.2002 US 368633 P**<br><br>(71) Applicant: **SMITHKLINE BEECHAM CORPORATION**<br>**Philadelphia Pennsylvania 19101 (US)** | (72) Inventors:<br>• **Keefer, Christopher E., GlaxoSmithKline**<br>**Research Triangle Park, NC 27709 (US)**<br>• **Wang, Jiuzhou, GlaxoSmithKline**<br>**Research Triangle Park, NC 27709 (US)**<br>• **Zhu, Lei, GlaxoSmithKline**<br>**Research Triangle Park, NC 27709 (US)**<br><br>(74) Representative: **Stott, Michael John et al**<br>**GlaxoSmithKline**<br>**Corporate Intellectual Property (CN9.25.1)**<br>**980 Great West Road**<br>**Brentford, Middlesex TW8 9GS (GB)** |

(54) **Methods, systems and computer program products for identifying relationships among multivariate responses and features in samples**

(57) An algorithm presented in a suitable set of software code for the identification of relationships among data points or data sets when the data points or data sets constitute multivariate responses and a plurality of features of interest from a plurality of biological tissue samples

FIG. 2

**Description**

**Cross-Reference to Related Applications**

This application claims the benefit of Application Serial No. 10/044,680, entitled *Means and Methods For Finding Associations In a Large, Sparse Data Table,* filed January 11, 2002, which itself claims the benefit of Provisional Application Serial No. 60/262,580, entitled *Methods, Systems and Computer Program Products for Identifying Conditional Associations Among Features in Samples* filed January 17, 2001. This application also claims the benefit of Application Serial No. 09/403,163, entitled *Statistical Decoding of Combinatorial Mixtures,* filed October 15, 1999, which itself claims the benefit of PCT International Application No. PCT/US98/07899, entitled *Statistical Deconvoluting of Mixtures*, filed April 17, 1998, and which itself claims the benefit of Provisional Application Serial No. 60/044,056, entitled *Statistical Decoding of Combinatorial Mixtures,* filed April 17, 1997. The disclosures of all of these applications are hereby incorporated herein by reference in their entirety as if set forth fully herein.

**Background of the Invention**

This invention relates to data processing systems, methods and computer program products, and more particularly to statistical data analysis systems, methods and computer program products.

During the course of performing research and development, massive amounts of data often are collected for a plurality of samples, also referred to as objects or subjects, where each sample can include a plurality of features, also referred to as characteristics or traits. One or more distinct responses also may be measured for the samples. Discrete features may be present, wherein the sample either does or does not possess the feature (binary feature), or a small number of discrete levels of the feature are present (n-ary feature). Continuous features also may be present wherein the sample may include a value from a continuous range of values of the feature. Moreover, in many applications, multivariate responses may be of interest. In particular, it may be desirable to identify relationships among the features relative to two or more distinct responses.

For example, massive amounts of genomic data are now becoming available. In this genomic data, the samples may be biological tissue samples and the features may be genes. The genes that are expressed in that sample can characterize the biological sample. Generally, most genes are not expressed, but some genes are expressed to varying degrees. The level of expression of a gene can be coded, for example as zero if not expressed or weakly expressed, and as one if expressed or strongly expressed, to provide a discrete feature. Alternatively, the features may be continuous traits such as weight, hair loss and blood pressure, that may be characterized by a value selected from a continuous range of values.

In another example, the sample is a consumer, and the features are various items for purchase at a store. The consumer selects various items for purchase that are noted at check-out. Still another example may relate to traffic flow, wherein a network, such as a road network or communications network includes multiple paths between nodes. The samples may be samples of vehicular or communications traffic between the nodes, and the features may be the various pathways in the network.

In all of the above and other examples, the features and samples may be related using a data table or matrix wherein, for example, the rows represent the plurality of samples and the columns represent the plurality of features. For discrete binary features, each row-column position of the matrix has a first binary value, for example 1, if the sample that is associated with the row exhibits a feature that is associated with a column, and a second binary value, for example 0, if the sample that is associated with the row does not exhibit the feature that is associated with the column. Thus, for example, an expressed gene in a sample can be indicated by a 1 at the position corresponding to the row of the sample and the column of the gene. Similarly, the purchasing of an item in a store by an individual can be represented by a 1 in the row-column position corresponding to the row of the individual and the column of the item. For continuous features, these 1s and 0s may be replaced by a value, preferably a scaled value, that indicates the value of the conditional feature.

It will be understood that, as used herein, the terms "row" and "column" indicate different directions in a matrix rather than absolute horizontal and vertical directions, and therefore may be interchanged. Moreover, it also will be understood that the term "matrix" is used to indicate any two-dimensional data structure that can represent features and samples, and may be represented in a data processing system as a table, database, memory map, linked list and/ or other conventional representations. Specifically, conventional programming techniques may be used to store the data in a compact way and/or in a manner that can facilitate computation. Thus, for example, the data may be stored by column.

In the above and many other examples, the number of features can be quite large, for example on the order of hundreds, thousands or more. However, the number of features that are actually exhibited, represented by 1s, may typically be quite low. Moreover, many samples, on the order of hundreds, thousands or more, may be measured. The result may be a large, sparse data table or matrix.

In such large, sparse matrices, it often is desirable to determine associations among the features. For example, it is often desirable to determine which genes are expressed together, or which items are purchased together. The search for associations may be computationally-intensive. For example, for 1,000 columns and 500 rows, there may be approximately 500,000 pair-wise associations, and over 166,000,000 three-way associations.

In research and development activities, a determination of these associations may be highly desirable. Thus, for example, in a drug discovery and/or chemical synthesis process, there may be interest in determining which genes are expressed together or which molecular features occur together. In consumer marketing, there may be a desire to determine which items are purchased together. Accordingly, techniques have been developed to identify associations among features in samples. Examples from the pharmaceutical discovery field now will be described.

For example, in Walker et al., *Pharmaceutical Target Discovery Using Guilt-by-Association: Schizophrenia and Parkinson's Disease Genes,* Proceedings of the Seventh International Conference on Intelligent Systems for Molecular Biology, 1999, pp. 281-285, genes associated with a disease are identified by looking for novel genes whose expression patterns mimic those of known disease-associated genes. This method is referred to as "Guilt-by-Association" (GBA). As described in Walker et al., GBA uses a combinatoric measure of association that provides superior results to those from correlation measures used in previous expression analyses. Using GBA, the expression of 40,000 human genes in 522 cDNA libraries was examined, and several hundred genes associated with known cancer, inflammation, steroid-synthesis, insulin-synthesis, neurotransmitter processing, matrix remodeling and other disease genes were identified. See the Walker et al. abstract.

Other techniques for identifying associations among features display the matrix, for example using different colors to represent the value of the discrete or continuous features. See, for example, Alizadeh et al., *Distinct Types of Diffuse Large B-Cell Lymphoma Identified by Gene Expression Profiling,* Nature, Vol. 403, February 3, 2000, pp. 503-511. As described therein, for example, at Page 504, about 1.8 million measurements of gene expression were made in 96 normal and malignant lymphocyte samples using 128 Lymphochip microarrays. A hierarchical clustering algorithm was used to group genes on the basis of similarity in the pattern, with their expression varied over all samples. The data are shown in a matrix format. To visualize the result, the expression level of each gene relative to its median expression level across all samples was represented by a color, with red representing expression greater than the mean, green representing expression less than the mean, and the color intensity representing the magnitude of the deviation from the mean. Also see Hughes et al., *Functional Discovery Via A Compendium Of Expression Profiles,* Cell, Vol. 102, July 2000, pp. 109-126, at Page 118.

**Brief Description of the Drawings**

Figure 1 is a block diagram of data processing systems according to embodiments of the present invention.
Figure 2 is an example of descriptor and response matrices that may be used when identifying relationships among multivariate responses and discrete, binary or continuous features according to embodiments of the present invention.

**Detailed Description of Preferred Embodiments**

The present invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The present invention is described below with reference to block diagrams and/or flowchart illustrations of methods, apparatus (systems) and/or computer program products according to embodiments of the invention. It is understood that each block of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function specified in the block diagrams and/or flowchart block or blocks.

The computer program instructions may also be loaded onto a computer or other programmable data processing apparatus to cause a series of operational steps to be performed on the computer or other programmable apparatus to produce a computer implemented method such that the instructions which execute on the computer or other programmable apparatus provide steps for implementing the functions specified in the block diagrams and/or flowchart block or blocks.

It should also be noted that in some alternative implementations, the functions noted in the blocks may occur out of the order noted in the flowcharts. For example, two blocks shown in succession may in fact be executed substantially concurrently or the blocks may sometimes be executed in the reverse order, depending upon the functionality involved.

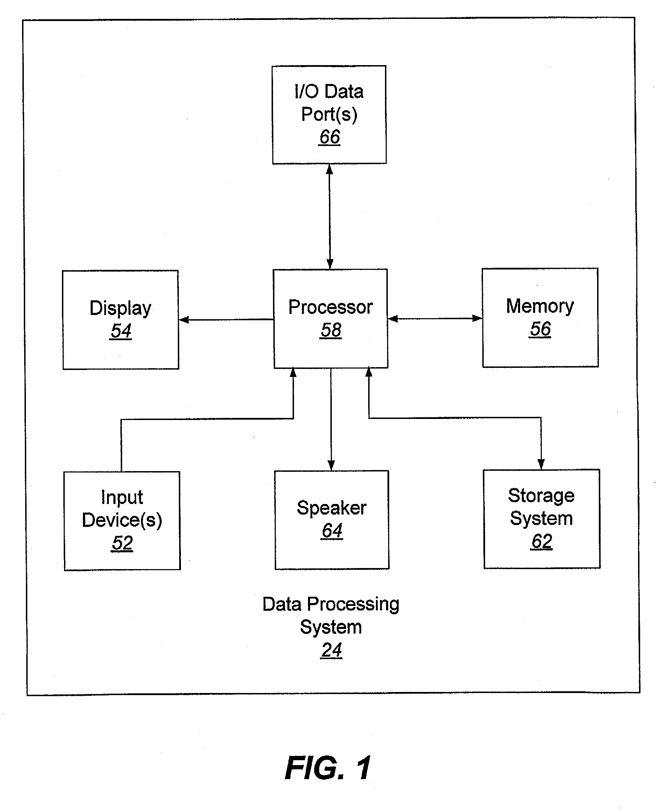

The present invention may be embodied in a data processing system such as illustrated in Figure 1. The data processing system **24** may be configured with computational, storage and control program resources for identifying conditional associations among a plurality of features in a plurality of samples, in accordance with embodiments of the present invention. Thus, the data processing system **24** may be contained in one or more enterprise, personal and/or pervasive computing devices, which may communicate over a network that may be a wired and/or wireless, public and/or private, local and/or wide area network such as the World Wide Web and/or a sneaker network using portable media. Moreover, when integrated into a single computing device, communication may take place via an Application Program Interface (API).

Still referring to Figure 1, embodiments of the data processing system **24** may include input device(s) **52**, such as a keyboard or keypad, a display **54**, and a memory **56** that communicate with a processor **58**. The data processing system **24** may further include a storage system **62**, a speaker **64,** and an input/output (I/O) data port(s) **66** that also communicate with the processor **58**. The storage system **62** may include removable and/or fixed media, such as floppy disks, ZIP drives, hard disks, or the like, as well as virtual storage, such as a RAMDISK. The I/O data port(s) **66** may be used to transfer information between the data processing system **24** and another computer system or a network (*e.g.*, the Internet). These components may be conventional components such as those used in many conventional computing devices, which may be configured to operate as described herein.

The memory **56** may include an operating system to manage the data processing system resources and one or more applications programs including one or more application programs for identifying conditional associations among a plurality of features in a plurality of samples, according to embodiments of the present invention.

According to embodiments of the invention, a matrix, referred to as a Descriptor Matrix, is defined having a plurality of rows that represent a plurality of samples and a plurality of columns that represent the plurality of features. In a drug discovery process, the samples may be a large number of samples, for example up to 10,000 or more samples from individual humans or organisms, and up to 10,000 or more genes and/or other features, that are measured in a sample. The samples and the features may be obtained using preexisting databases, clinical trials, microarray chips and/or many other conventional techniques.

As was described above, as used herein, the terms "row" and "column" indicate different directions in a matrix rather than absolute horizontal and vertical directions, and therefore may be interchanged. Moreover, the term "matrix" is used to indicate any two-dimensional structure that can represent features and samples, and may be represented in a data processing system as a table, database, memory map, linked list and/or other conventional representations.

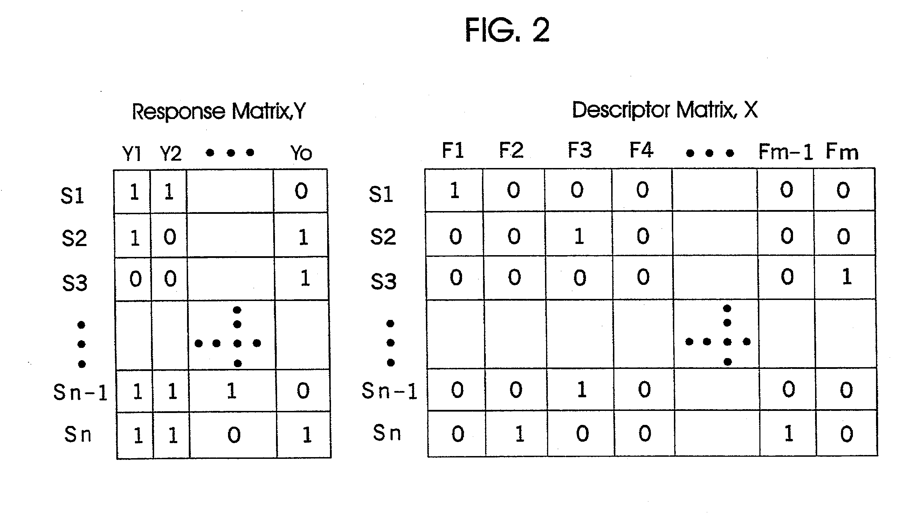

Figure 2 is an example of a Descriptor Matrix that may be used when measuring discrete, binary or continuous features. The rows of the Descriptor Matrix comprise a plurality of samples **S1-Sn,** and the columns of the matrix comprise a plurality of features **F1-Fm.** For a binary discrete feature, such as disease present/absent or gene is expressed/is not expressed, each row-column position of the matrix has a first binary value, such as binary 1 if the sample that is associated with the row exhibits a feature that is associated with the column, and a second binary value, such as 0, if the sample that is associated with the row does not exhibit the feature that is associated with the column. Since conventionally, very few of the row-column intersections will exhibit the feature, the matrix of Figure 2 generally defines a "sparse" matrix.

It will be understood that the Descriptor Matrix of Figure 2 has been described with respect to binary or n-ary discrete features. For continuous features, segmentation calculations may be used to define a score. Dividing the rows into two or more groups of rows is referred to as the segmentation or change-point problem and is described, for example, in Venter et al., *Finding Multiple Abrupt Change Points,* Computational Statistics and Data Analysis, Vol. 22, No. 5, 1996, pp. 481-504. One of the remaining columns may be selected based on the scores, and the rows that are associated with the selected column may be divided or partitioned based on range partitions of the continuous values in the rows, to thereby obtain at least two submatrices and at least two corresponding branches of the tree. The range partitions may be selected, for example, by generating a scatter plot that can identify appropriate clustering ranges and/or by segmentation techniques. Thus, for continuous features, each node may branch into two, three or more branches depending upon the number of range partitions of the continuous values that is desired.

## Multivariate Conditional Associations

U.S. Patent Application Serial No. 09/403,163 entitled *Statistical Decoding of Combinatorial Mixtures* to Farmen et al. describes computer-based statistical techniques for encoding features of mixtures, whether the features be of individual data objects in a mixture or features of mixtures themselves, and of identifying and correlating those individual features to a response characteristic that is a trait of interest of the individual data object or of the mixture. Also see the publication by Rusinko et al. entitled *Analysis of a Large Structure/Biological Activity Data Set Using Recursive Partitioning,* Journal of Chemical Information and Computer Sciences, Vol. 39, No. 6, pp. 1017-1026, the disclosure of which is hereby incorporated herein by reference in its entirety as if set forth fully herein. Moreover, U.S. Patent Application 10/044,680 to Young et al., entitled *Means and Methods For Finding Associations In a Large, Sparse Data Table,* describes the identification of conditional associations among features and samples, by defining the matrix having a first binary value if the sample that is associated with a row exhibits the feature that is associated with a column, and a second binary value if a sample that is associated with the row does not exhibit the feature that is associated with the column. Recursive partitioning then is performed for each column. In particular, for each column, the column is recursively partitioned relative to the remaining ones of the columns, to define a tree of conditional branches for the rows for each column. The collection of trees of conditional branches for the columns may be displayed and/or analyzed to identify conditional associations of interest. Continuous features, wherein each row-column position of the matrix has a value selected from a continuous range of values, also may be analyzed.

In many applications, multivariate responses may be of interest. In multivariate response applications, relationships among features and samples may be identified relative to two or more distinct responses. Figure 2 also illustrates a Response Matrix, wherein a plurality of responses $Y_1$-$Y_o$ are shown as columns, and the associated samples $S_1$-$S_n$ are shown as rows.

When a small number of covariates are associated with these responses and the responses are continuous measurements, conventional parametric and nonparametric models may be used. With large numbers of covariates, many of the parametric models may not work well due to dimensionality and nonlinearity. For example, a publication by Keefer entitled *"Use of multivariate data mining techniques in pharmaceutical systems based research,"* Abstracts of papers, 222nd ACS National Meeting, Chicago, 2001 describes a recursive partitioning algorithm called MultiSCAM for analyzing multivariate continuous responses which can handle a large number of binary covariates.

Embodiments of the invention can efficiently identify relationships among features and multivariate categorical responses. Embodiments will be described where both the response and covariates are binary. However, these embodiments can be generalized to the case in which the responses are categorical.

One environment where embodiments of the invention may be used is to investigate the relationship between molecular structure and biological activity of compounds in a Quantitative Structure Activity Relationship (QSAR) study. In a QSAR study, the biological activity of a number of compounds against a few target proteins is measured in numerical values. These activity measurements can be arranged in a matrix for which each column corresponds to a target protein and each row corresponds to a compound. This matrix may be called a *response matrix* and denoted by Y. See Figure 2. The molecular structure of the compounds is recorded in terms of two-dimensional (2D) atom pair (AP) descriptors. The structure information can also be placed into a matrix where each row describes a compound and each column represents a particular atom pair. The entry at the ith row and *j*th column is 1 if *j*th atom pair is present in ith compound and 0 otherwise. Therefore, this *descriptor matrix* (denoted by *X*) is a binary matrix. See Figure 2. To summarize, these studies can produce a matrix $Y_{nxq}$ and a descriptor matrix $X_{nxp}$, where

- *n* is the number of compounds involved in the study,
- *p* is the number of AP descriptors, and
- *q* is the number of target proteins.

According to some embodiments of the invention, the covariate matrix is denoted by $X_{n \times p}$, where *p* covariate variables (columns) are measured at *n* individuals (rows). The response matrix is denoted by $Y_{n \times q}$ where *q* response variables (columns) are observed at *n* individuals (rows).

For the *i*th individual ($i$ = 1,...,*n*), the covariates and responses are $\mathbf{x}_i = (x_{i1},..., x_{ip})$ and $\mathbf{y}_i = (y_{i1},...y_{iq})$ respectively. A typical set of data is

$$\begin{pmatrix} y_{11} & y_{12} & \cdots & y_{1q} \\ y_{21} & y_{22} & \cdots & y_{2q} \\ \vdots & \vdots & \ddots & \vdots \\ y_{n1} & y_{n2} & \cdots & y_{nq} \end{pmatrix} \begin{pmatrix} x_{11} & x_{12} & \cdots & x_{1p} \\ x_{21} & x_{22} & \cdots & x_{2p} \\ \vdots & \vdots & \ddots & \vdots \\ x_{n1} & x_{n2} & \cdots & x_{np} \end{pmatrix}$$

where $x_{ij}$ and $y_{ik}$ are either 0 or 1.

Recursive partitioning for univariate response have been studied extensively in both statistical and non-statistical (e.g. machine learning) literature. Morgan, et al., "*Problems in the analysis of survey data, and a proposal,*" Journal of the American Statistical Association Vol. 58, pages 415-434, 1963 introduced recursive partitioning with AID (Automatic Interaction Detection). Kass, "*Significance testing in automatic interaction detection (a.i.d.),*" Applied Statistics Vol. 24, pages 178-189, 1975 introduced CHAID (CHi-squared Automatic Interaction Detection) which was later developed into FIRM (Formal Inference-based Recursive Modeling) in Hawkins, "*Topics in Applied Multivariate Analysis,*" Cambridge University Press, 1982. Breiman, et al., "*Classification And Regression Trees,*" Boca Raton: Chapman & Hall /CRC, 1984 introduced CART (Classification And Regression Trees). C4.5 is another technique in the field of recursive partitioning as described by Quinlan, "*C4.5: Programs for Machine Learning,*" CA:Morgan Kaufmann, 1993.

Recently, researchers have started paying attention to tree structured recursive partitioning methods for multivariate responses. In particular, Zhang, "*Classification trees for multiple binary responses,*" Journal of the American Statistical Association Vol. 93, pages 180-193, 1998 generalized the methodology of CART to the case in which multivariate binary responses are of interest. In the case where a large number of covariates are of concern, however, Zhang's generalized entropy approach involves computing the Maximum Likelihood Estimates (MLE) of the parameters in the multivariate binary distribution model for every possible split. The procedure for finding the MLE generally is carried out through iteration, because there may be no closed form solution. When large numbers, such as thousands or more of covariates are involved, the computational burden may become enormous.

In contrast, embodiments of the invention need not model the probability distribution of the binary vector y. Instead, first embodiments use a node impurity measurement which can have a simple closed form expression. Second embodiments use a between-node-distance measurement based on a $\chi^2$ test statistic as the basis of the splitting criteria. Embodiments of the invention may not improve Zhang's generalized entropy approach in terms of the quality of the resulting tree. However, embodiments of the invention may be computationally desirable in the context of large scale data mining problems.

First Embodiments

These embodiments find a split resulting in "purer" subnodes. These first embodiments may involve operations for splitting, stopping and pruning. These operations now will be described in detail.

1. Splitting.

Assume it is desired to find the "best" split for node t. For each $j = 1,..., p$, the node $t$ can be divided into two subgroups according to the binary values of the $j$th covariates ($j$th column of $X$ matrix). Specifically, the ith observation $\mathbf{y}_i$ splits to subgroup 0 (or left subnode of $t$, or $t_L$) if $x_{ij} = 0$ or subgroup 1 (or right subnode of $t$, or $t_R$) if $x_{ij} = 1$, where $\mathbf{y}_i \in t$.

The node impurity for node t is defined as

$$I(t) = \sum_{\mathbf{y}_i \in t} \sum_{k=1}^{q} | y_{ik} - \hat{y}_{\cdot k} |$$

where

$$\hat{y}_{\cdot k} = \begin{cases} 1 & \text{if } \sum_{\mathbf{y}_i \in t} y_{ik} \geq \sum_{\mathbf{y}_i \in t} (1 - y_{ik}) \\ 0 & \text{otherwise} \end{cases}$$

Note that $\hat{y}\cdot_k$ is the majority of the *k*th column in *Y* matrix. For example, suppose the response matrix for node *t* is

$$Y = \begin{pmatrix} 1 & 0 & 1 & 1 \\ 1 & 1 & 0 & 0 \\ 0 & 1 & 0 & 1 \\ 1 & 0 & 1 & 0 \\ 1 & 0 & 1 & 0 \\ 1 & 1 & 0 & 0 \\ 0 & 0 & 1 & 1 \end{pmatrix}$$

Then $(\hat{y}\cdot_1, \hat{y}\cdot_2, \hat{y}\cdot_3, \hat{y}\cdot_4) = (1,0,1,0)$ because there are more 1's than 0's in the 1st and 3rd columns. Thus, $I(t) = 2 + 3 + 3 + 3 = 11$. One can show that for any split of t which results in subnodes $t_L$ and $t_R$,

$$I(t) \geq I(t_L) + I(t_R)$$

The best split for node *t* may be defined as the one that maximizes $I(t) - I(t_L) - I(t_R)$. The maximum for node *t* is denoted by $\Delta I(t)$.

2. Stopping.

Node *t* is declared to be a terminal node if i) $\Delta I(t)$ is less than a threshold value, which may be arbitrarily predefined, or ii) the sample size in node *t* is less than a threshold value, which may be arbitrarily predefined.

3. Pruning.

As pointed out in the above-cited Breiman et al. publication, the quality of the final tree may depend on the threshold values for the stopping. Some embodiments of the invention build an oversized tree first (with low threshold values), and then prune it back.
As mentioned earlier, these first embodiments can be generalized to categorical responses with slight modification in the definition of $I(t)$.

Second Embodiments

These second embodiments are based on the $\chi^2$ test for a frequency table. These embodiments recode the binary or continuous vector $\mathbf{y}_i$ to a single categorical variable *G*,

$$G_i = g(y_i)$$

where $g(\cdot)$ is a one-one mapping. A good split separates the two subnodes as much as possible. The $\chi^2$ statistic is the measurement of the "distance" between two subnodes. However, other statistics may be used. For simplicity of notation, assume $G_i \in \{1,2,... K\}$ for $\mathbf{y}_i \in$ node *t*. Suppose that a split of node t results in subnodes $t_L$ and $t_R$ The following frequency table may be constructed:

| G | 1 | 2 | ... | K | sum |
|---|---|---|-----|---|-----|
| $t_L$ | $n_{01}$ | $n_{02}$ | ... | $n_{0K}$ | $n_0.$ |
| $t_R$ | $n_{11}$ | $n_{12}$ | ... | $n_{1K}$ | $n_1.$ |
| sum | $n._1$ | $n._2$ | ... | $n._K$ | N |

Without loss of generality, one can assume that the marginal counts are nonzero. The $\chi^2$ statistic for this table can then be written as

$$\chi^2 = \sum_{k=1}^{K} \frac{(n_{1.}n_{0k} - n_{0.}n_{1k})^2}{n_{0.}n_{1.}n_{.k}}$$

The best split can minimize the *p*-value of this test statistic. In some embodiments, splitting of a node can stop when no test is significant for all possible splits of that node. Again, generalization to categorical responses may be obtained.

In the drawings and specification, there have been disclosed typical preferred embodiments of the invention and, although specific terms are employed, they are used in a generic and descriptive sense only and not for purposes of limitation. The following claim is provided to ensure that the present application meets all statutory requirements as a priority application in all jurisdictions and shall not be construed as setting forth the full scope of the present invention.

## Claims

1. A method of identifying relationships among multivariate responses and a plurality of features in a plurality of samples, the method comprising:

   defining a descriptor matrix having a plurality of rows that represent the plurality of samples and a plurality of columns that represent the plurality of features, each row-column position of the descriptor matrix having a first binary value if the sample that is associated with the row exhibits the feature that is associated with the column and a second binary value if the sample that is associated with the row does not exhibit the feature that is associated with the column;

   defining a multivariate response matrix having a plurality of rows that represent the plurality of samples and a plurality of columns representing a plurality of binary or continuous response variables; and

   identifying relationships between elements of the multivariate response matrix and elements of the descriptor matrix.

I/O Data
Port(s)
66

Display
54

Processor
58

Memory
56

Input
Device(s)
52

Speaker
64

Storage
System
62

Data Processing
System
24

**FIG. 1**

# FIG. 2

**Response Matrix, Y**

|      | Y1 | Y2 | • • • | Yo |
|------|----|----|-------|----|
| S1   | 1  | 1  |       | 0  |
| S2   | 1  | 0  |       | 1  |
| S3   | 0  | 0  |       | 1  |
| •••  |    |    |       |    |
| Sn-1 | 1  | 1  | 1     | 0  |
| Sn   | 1  | 1  | 0     | 1  |

**Descriptor Matrix, X**

|      | F1 | F2 | F3 | F4 | • • • | Fm-1 | Fm |
|------|----|----|----|----|-------|------|----|
| S1   | 1  | 0  | 0  | 0  |       | 0    | 0  |
| S2   | 0  | 0  | 1  | 0  |       | 0    | 0  |
| S3   | 0  | 0  | 0  | 0  |       | 0    | 1  |
| •••  |    |    |    |    |       |      |    |
| Sn-1 | 0  | 0  | 1  | 0  |       | 0    | 0  |
| Sn   | 0  | 1  | 0  | 0  |       | 1    | 0  |